# EUROPÄISCHE PATENTSCHRIFT

(11) **EP 0 421 268 B1**
(45) Veröffentlichungstag und Bekanntmachung des Hinweises auf die Patenterteilung: **18.01.1995**
(21) Anmeldenummer: 90118531.4
(22) Anmeldetag: 27.09.1990
(51) Int. Cl.: C08G 65/30, C08G 65/20

(54) **Verfahren zur Reinigung von Polyalkylenetherglykolen, die Heteropolysäuren enthalten**
Process for the preparation of polyalkyleneetherglycols containing heteropoly acids
Procédé pour la purification de glycols polyalkylène éthers contenant des hétéropolyacides

(30) Priorität: 06.10.1989 DE 3933333
(43) Veröffentlichungstag der Anmeldung: 10.04.1991
(73) Patentinhaber: BASF Aktiengesellschaft, 67063 Ludwigshafen (DE)
(72) Erfinder: Mueller, Herbert, Dr., D-6710 Frankenthal (DE); Jeschek, Gerhard, Dr., D-6718 Gruenstadt (DE); Fischer, Rolf, Dr., D-6900 Heidelberg (DE); Weyer, Hans-Juergen, Dr., D-6800 Mannheim 1 (DE)

(56) Entgegenhaltungen:
- EP-A- 0 181 621
- EP-A- 0 202 487
- EP-A- 0 236 995
- EP-A- 0 307 811

## Beschreibung

Diese Erfindung betrifft ein Verfahren zur Reinigung von solchen Polyalkylenetherglykolen, die durch Heteropolysäuren verunreinigt sind, wie sie z.B. durch Polymerisation von Tetrahydrofuran an Heteropolysäuren erhalten werden. Das neue Verfahren ermöglicht die weitgehende Abtrennung und Wiedergewinnung der Heteropolysäuren und die Gewinnung von Polyalkylenetherglykolen mit hoher Reinheit.

Polyalkylenetherglykole wie Polyoxitetramethylenglykole (im folgenden als "PTMG" bezeichnet), insbesondere Polytetrahydrofuran (im folgenden mit "PTHF" bezeichnet) sind wichtige Ausgangsstoffe für die Herstellung von elastischen Fasern, elastischen Konstruktionswerkstoffen und Beschichtungen. Man stellt sie her durch Polymerisation von Tetrahydrofuran (im folgenden als "THF" bezeichnet) oder durch Copolymerisation von THF mit Oxiranen, wie Ethylenoxid oder Propylenoxid in Gegenwart kationischer Katalysatoren. Nach den Angaben der EP-A-0 126 471 verwendet man als Katalysatoren Heteropolysäuren. Bei diesem Verfahren gelingt es, den größten Teil des Katalysators nach der Reaktion durch einfache Phasentrennung wiederzugewinnen und in die Reaktion zurückzuführen. Ein nicht zu vernachlässigender Teil des Katalysators bleibt jedoch in der abgetrennten Polymerenlösung gelöst. Er muß aus Kostengründen und auch wegen der geforderten Reinheit des PTMG vollständig abgetrennt werden.

Ein Verfahren zur Reinigung von PTMG-Lösungen, die durch Heteropolysäuren verunreinigt sind, wird in der EP-A-0 181 621 beschrieben. Bei diesem mehrstufigen Verfahren werden die bei der Polymerisation von THF primär erhaltenen PTMG-Lösungen in THF, die einen PTMG-Gehalt von z.B. 23 Gew.-% aufweisen, in der ersten Stufe durch Abdestillieren von nicht umgesetztem THF auf eine Konzentration von etwa 50 Gew.-% PTMG gebracht. Danach gibt man eine erhebliche Menge eines Kohlenwasserstoffs zu, mischt gründlich und läßt das Gemisch während 30 Stunden in zwei Phasen absetzen. Die untere Phase besteht zu 50 Gew.-% aus der Heteropolysäure, der Rest aus PTMG, THF und Spuren des Kohlenwasserstoffes. Aus der oberen Phase, die die Hauptmenge des PTMG enthält, wird nicht umgesetztes THF abdestilliert. Die zurückbleibende Mischung aus Kohlenwasserstoff und PTMG trennt sich beim Abkühlen erneut in zwei Phasen. Man erhält eine Kohlenwasserstoff-Phase und eine Phase aus PTMG mit gelöstem Kohlenwasserstoff. Wird der Kohlenwasserstoff aus der PTMG-enthaltenden Phase abdestilliert, so erhält man schließlich ein PTMG, das noch 50 ppm Heteropolysäure enthält. Da dieser Gehalt an der stark sauren Verbindung im PTMG nicht toleriert werden kann, wird die Konzentration der Heteropolysäure in einer weiteren Operation dadurch reduziert, daß man das PTMG erneut in einem Kohlenwasserstoff löst und mit einem Adsorptionsmittel, wie Calziumoxid, Magnesiumoxid, Alumiumoxid, Aktivkohle oder einer aktiven Tonerde behandelt. Dieses Verfahren ist somit sehr umständlich. Es ist aber auch sehr aufwendig, da für die restlose Entfernung des Katalysators aus dem Polymerisat etwa die vierfache Menge Kohlenwasserstoff nach den Reinigungsoperationen verdampft werden muß (s. Beispiele 1 und 15 der EP-A-0 181 621). Auf Seite 3, Zeilen 6 bis 24 der genannten Patentanmeldung wird darauf hingewiesen, daß die Entfernung der Heteropolysäuren aus den Polymerisaten durch Extraktion mit Wasser oder Filtration oder Auswaschen der neutralisierten Salze nicht wirtschaftlich durchführbar ist.

Da bei der Polymerisation von THF mit Heteropolysäuren für die Herstellung elastischer Fasern gut geeignete Polyalkylenetherglykole mit einer vorteilhaften engen Molekulargewichtsverteilung gebildet werden, war nach einem Verfahren zu suchen, das es erlaubt, die Heteropolysäuren aus rohem PTMG auf einfachem Wege wirksam abzutrennen. Das neue Verfahren sollte insbesondere einen genügend hohen Durchsatz erlauben, kontinuierlich ausführbar sein und sich durch einen niedrigen Energieaufwand auszeichnen.

Es wurde nun gefunden, daß man bei der Reinigung von rohen Polyalkylenetherglykolen, die durch Heteropolysäuren oder deren Salze verunreinigt sind, durch Behandlung mit Lösungsmittel besonders vorteilhafte Ergebnisse erhält, wenn man die rohen Polyalkylenetherglykole mit einem flüssigen Kohlenwasserstoff und Wasser vermischt, wobei bezogen auf die Gewichtsmenge der Polyalkylenetherglykole, die 0,2- bis 0,5- fache Gewichtsmenge des Kohlenwasserstoffs und die 0,03- bis 2- fache Gewichtsmenge Wasser, verwendet wird, und die gereinigten Polyalkylenetherglykole nach Phasentrennung aus der oberen Phase isoliert.

Nach dem neuen Verfahren, das die gestellte Aufgabe weitgehend erfüllt, wird die Heteropolysäure aus dem rohen PTMG in einer Trennstufe nahezu vollständig entfernt.

Bei dem rohen, mit Heteropolysäuren oder deren Salzen verunreinigten PTMG handelt es sich um Polymerisate, die nach an sich bekannten Methoden, wie sie z.B. in der EP-A-0 126 471 beschrieben sind, durch Polymerisation von THF oder durch Copolymerisation von THF mit Oxiranen in Gegenwart von Heteropolysäuren erhalten werden. Dieses rohe PTMG fällt bei der Herstellung als flüssiges Gemisch an, das nicht umgesetztes THF und den Katalysatoren enthält. Gemische dieser Art, die in dieser Form unmittelbar dem Reinigungsverfahren der Erfindung unterzogen werden können, haben einen Gehalt an PTMG von 5 bis 60, vorzugsweise 5 bis 45, insbesondere 10 bis 40 Gew.-% , an THF von 94,99 bis 39,99, vorzugsweise 94,99 bis 54,99, insbesondere 89,90 bis 59,90 Gew.-% und an Heteropolysäuren bzw. deren Salzen von 0,01 bis 6, vorzugsweise 0,1 bis 4 Gew.-%.

Heteropolysäuren oder auch ihre sauren Salze, die nach dem erfindungsgemäßen Erfindung aus dem rohen PTMG abgetrennt werden, sind anorganische Polysäuren mit - im Gegensatz zu Isopolysäuren - mindestens zwei verschiedenen Zentralatomen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seien genannt die Dodecawolframphosphorsäure H³[PW₁₂O₄₀] und die Dodecamolybdophosphorsäure H³[PM₀₁₂O₄₀]. Heteropolysäuren können als zweites Zentralatom auch Actinoide oder Lanthanoide enthalten. Die Heteropolysäuren können allgemein durch die Formel H₈-n(YⁿM₁₂O₄₀) mit n = Wertigkeit des Elementes Y (z.B. Bor, Silizium, Zink) beschrieben werden. Heteropolysäuren, die bevorzugt für die Herstellung von PTMG verwendet werden, sind Phosphormolybdänsäure und Phosphorwolframsäure sowie Siliziummolybdänsäure und Siliziumwolframsäure.

Als flüssige Kohlenwasserstoffe werden z.B. gesättigte oder ungesättigte aliphatische oder cycloaliphatische Kohlenwasserstoffs mit 5 bis 10 C-Atomen oder aromatische Kohlenwasserstoffe mit 6 bis 10 C-Atomen verwendet, wie Pentan, Cyclopentan, Hexan, Heptan, Methylcyclohexan, Oktan, Decan, Cyclohexan, Cyclooctan, Benzol, Toluol, Xylol, Diethylbenzol und Naphthalin, von denen Cyclopentan, Cyclohexan und Methylcyclohexan bevorzugt sind. Man wendet, bezogen auf die Gewichtsmenge PTMG, z.B. die 0,2- bis 5-fache, insbesondere die 0,5- bis 2-fache Gewichtsmenge des Kohlenwasserstoffs und die 0,03- bis 2-fache, insbesondere die 0,1- bis 1-fache Gewichtsmenge Wasser an. Beim Einsatz von Ausgangsgemischen mit höhern THF-Gehalten werden dabei Wassermengen benötigt, die im oberen Mengenbereich liegen, wobei in jedem Falle mindestens so viel Wasser zuzugeben ist, daß sich durch Phasentrennung eine untere, Wasser enthaltende Schicht bildet.

Das rohe PTMG wird mit dem Kohlenwasserstoff und Wasser zweckmäßig bei Temperaturen von 5 bis 60°C, vorzugsweise bei 10 bis 45°C vermischt. Die Phasentrennung kann im genannten Temperaturbereich vorgenommen werden.

Überraschenderweise tritt nach dem Vermischen eine Trennung des Gemisches in 2 oder 3 Phasen ein. Die unteren Phasen enthalten je nach angewendetem Mengenverhältnis von Kohlenwasserstoff und Wasser bis zu 99 Gew.-% der im rohen PTMG enthaltenen Heteropolysäure. Die unterste Phase - falls sie gebildet wird - ist fast reine wasserhaltigen Heteropolysäure. Die mittlere Phase enthält Wasser, eine geringe Menge THF und Cyclohexan sowie Heteropolysäure. Die obere, leichteste Phase besteht im wesentlichen aus Cyclohexan, PTMG und dem nicht umgesetzten THF. Sie enthält nur noch Spuren der Säure. Die untere wasserhaltige Phase, die die Heteropolysäuren enthält, kann nach Abscheidung ohne weitere Behandlung erneut für eine Polymerisation herangezogen werden. Aus der mittleren wasserhaltigen Phase kann das THF durch Destillation gewonnen werden. Vorteilhaft wird aber die mittlere Phase direkt für das erfindungsgemäße Reinigungsverfahren eingesetzt. Der Wasserzusatz kann dann unterbleiben. Die obere Phase enthält das im wesentlichen von der Heteropolysäure befreite PTMG. Spuren der darin noch enthaltenen Säure werden durch Vermischen mit einer Base, wie 1 bis 50%iger Natronlauge oder Kalilauge neutralisiert. Anschließend wird das PTMG, z.B. im Filmverdampfer unter Normaldruck oder im Vakuum von dem Lösungsgemisch getrennt. Eine Endfiltration des Polymerisates liefert ein PTMG mit einem sehr hohen Qualitätsstandard, da es frei von Verunreinigungen ist und eine sehr enge Molekulargewichtsverteilung aufweist. Die Lösungsmittel, die bei der Eindampfung anfallen, können nach bekannten physikalischen Methoden, z.B. durch Destillation getrennt und gereinigt werden. Sie können ohne jede Einschränkung wieder verwendet werden; das gewonnene THF für eine erneute Polymerisation, der Kohlenwasserstoff und das Wasser für einen Einsatz beim erfindungsgemäßen Verfahren. Gibt man beim erfindungsgemäßen Verfahren nur geringe Mengen an Wasser zu, so entstehen nach dem Vermischen nur zwei Phasen. Die Aufarbeitung der Phasen, von dem die obere nahezu säurefrei ist und die untere wasserhaltige Phase die Heteropolysäure enthält, erfolgt sinngemäß.

Die in den Beispielen genannten Teile sind Gewichtsteile, Prozente sind Gewichtsprozente.

### Beispiel

a) Polymerisation von THF zu PTHF
   Man gibt zu 400 Teilen Phophorwolframsäure H³[PW₁₂O₄₀], die bei 150°C und 0,1 mbar entwässert wurden bei Temperaturen unter 40°C und im Verlaufe von 1 h vorsichtig eine Lösung aus 11 Teilen Wasser und 300 Teilen THF (Wassergehalt 0,011 %). Das Gemisch aus Säure, Wasser und THF wird 6 h bei 60°C intensiv gerührt. Das Reaktionsgemisch läßt man stehen, wobei es zwei Phasen bildet. Die beiden Phasen werden voneinander getrennt. In der oberen Phase befindet sich ein Teil des gebildeten PTHF. Die Gesamtmenge der oberen Phase beträgt 24 Teile, sie enthält 5 Teile PTHF vom Molekulargewicht 2.830 mit einer Polydispersität M_{w} : Mₙ = 1,5, der Rest ist THF und etwa 1 Teil Heteropolysäure. In der unteren Phase befinden sich neben dem Monomeren (THF) und PTMG ca. 399 Teile Heteropolysäure. Da bei diesem ersten Ansatz noch kein stationäres Ergebnis bei der Polymerisation erhalten wird, werden in weiteren Ansätzen jeweils erneut 300 Teile THF mit 2,7 Teilen Wasser und der Heterpolysäuren, die man aus dem vorhergehenden Ansatz zurückgewonnen hat, jeweils 4 h bei 60°C gerührt. Dann trennt man wie oben beschrieben, die untere, den Katalysator enthaltende Phasen von der oberen, PTHF und THF-haltigen Phase ab.
   Nach dem sechsten Ansatz erhält man bei der Polymerisation ein stationären Ergebnis, d.h. es wird ein PTHF mit konstantem Molekulargewicht erhalten. Aus diesem und weiteren Ansätzen werden jeweils 295 bis 300 Teile einer rohen, von der Katalysatorphase abgetrennten PTHF-Lösung mit der folgenden Zusammenfassung erhalten: 38 Gew.-% PTHF, 58,6 Gew.-% THF, 3,2 Gew.-% Phosphorwolframsäure und 0,2 Gew.-% Wasser.
b) Reinigung des rohen PTHF
   395 Teile der nach Absatz a) erhaltenen rohen PTHF-Lösung werden bei 25°C mit 240 Teilen Cyclohexan und 28 Teilen Wasser verrührt. Danach setzt sich das Gemisch in 3 Phasen ab. Es werden ca. 600 Teile obere Phase erhalten, die sich aus 249 Teilen THF, 122 Teilen PTHF und ca. 220 Teilen Cyclohexan zusammensetzt. Der Gehalt an Heteropolysäure ist < 30 ppm. Die mittlere Phase besteht aus 25 Teilen Wasser, 9 Teilen THF, 5 Teilen Cyclohexan und 4,6 Teilen der Heteropolysäure. Sie wird durch 3 Teilen Wasser ergänzt und für die Reinigungsoperationen des nächsten Reaktionsansatzes eingesetzt. Die untere Phase, insgesamt 6,3 Teile, besteht zu 80 Gew.-% aus Phosporwolframsäure, der Rest ist Wasser. Sie kann, da der Wassergehalt bei nur 20 % liegt, in dieser Form direkt in die Katalysatorphase der Polymerisationsstufe zurückgegeben werden, wenn man im nachfolgenden Polymerisationsansatz das dadurch hinzugefügte Wasser berücksichtigt.
   Die obere Phase, die das weitgehend gereinigte PTHF enthält, wird durch die Zugabe von 10 Gewichtsteilen 10%iger Natronlauge und gründlicher Druchmischung von restlichen sauren Bestandteilen befreit.
   Die daraus resultierende Lösung wird im Rotationsverdampfer eingedampft. Dabei erhält man 122 Teile PTHF. Zu Entfernung der für die Neutralisaton benützten Base, die in suspendierter Form vorliegt, filtriert man über ein Schichtenfilter der Firma Seitz und erhält hochreines PTHF vom Molekulargewicht 2.040 und einer Polydispersität M_{w} : Mₙ von 1,5.
   Ähnliche Ergebnisse werden erhalten wenn man bei der Polymerisation als Katalysatoren die Heteropolysäuren H₄SiMo₁₂O₄₀ oder H₄SiW₁₂O₄₀ verwendet. Allerdings beträgt die Polymerisationsgeschwindigkeit in diesen Fällen nur etwa 60 % der obenbeschriebenen und der erzielte Umsatz des Tetrahydrofurans liegt bei nur 20 %.

## Patentansprüche

1. Verfahren zur Reinigung von rohen Polyalkylenetherglykolen, die durch Heteropolysäuren oder deren Salze verunreinigt sind, durch Behandlung mit Lösungsmittel, dadurch gekennzeichnet, daß man die rohen Polyalkylenetherglykole mit einem flüssigen Kohlenwasserstoff und Wasser vermischt, wobei bezogen auf die Gewichtsmenge der Polyalkylenetherglykole, die 0,2- bis 0,5-fache Gewichtsmenge des Kohlenwasserstoffs und die 0,03- bis 2-fache Gewichtsmenge Wasser, verwendet wird, und die gereinigten Polyalkylenetherglykole nach Phasentrennung aus der oberen Phase isoliert.

2. Verfahren nach Anspruch 1, dadurch gekennzeichnet, daß man rohe Polyalkylenetherglykole reinigt, die durch Polymerisation von Tetrahydrofuran oder durch Copolymerisation von Tetrahydrofuran mit Oxiranen in Gegenwart von Heteropolysäuren erhalten werden.

3. Verfahren nach Anspruch 1, dadurch gekennzeichnet, daß man als rohe Polyalkylenetherglykole Gemische einsetzt, die ein Gehalt an Polyalkylenetherglykol von 5 bis 60 Gew.-% , an Tetrahydrofuran von 94,99 bis 39,99 Gew.-% und an Heteropolysäuren oder deren Salze von 0,01 bis 6 Gew.-% aufweisen.

4. Verfahren nach Anspruch 1, dadurch gekennzeichnet, daß man als Kohlenwasserstoffe Cyclohexan, Cyclopentan oder Methylcyclohexan verwendet.

5. Verfahren nach Anspruch 1, dadurch gekennzeichnet, daß man die durch Phasentrennung erhaltene, Wasser und Heteropolysäure enthaltende untere Phase für die Polymerisation von Tetrahydrofuran verwendet.

6. Verfahren nach Anspruch 1, dadurch gekennzeichnet, daß man die durch Phasentrennung erhaltenen, Wasser, Heteropolysäure und Tetrahydrofuran erhaltenden unteren Phasen teilweise oder vollständig durch Destillation von Tetrahydrofuran und Wasser befreit und für die Polymerisation von Tetrahydrofuran verwendet.

7. Verfahren nach Anspruch 1, dadurch gekennzeichnet, daß man die bei der Phasentrennung erhaltene, Wasser und Kohlenwasserstoff enthaltende mittlere Phase für die Lösungsmittelbehandlung der rohen Polyalkyletherglykolen heranzieht.

## Claims

1. A process for the purification of crude polyalkylene ether glycols contaminated by heteropolyacids or salts thereof, by treatment with solvents, which comprises mixing the crude polyalkylene ether glycols with a liquid hydrocarbon and water, where, based on the weight of polyalkylene ether glycols, from 0.2 to 5 times the amount of the hydrocarbon and from 0.03 to 2 times the amount of water are used, allowing the phases to separate, and isolating the purified polyalkylene ether glycols from the upper phase.

2. A process as claimed in claim 1, wherein crude polyalkylene ether glycols obtained by polymerizing tetrahydrofuran or by copolymerizing tetrahydrofuran with oxiranes in the presence of heteropolyacids are purified.

3. A process as claimed in claim 1, wherein the crude polyalkylene ether glycols are mixtures containing from 5 to 60% by weight of polyalkylene ether glycol, from 94.99 to 39.99% by weight of tetrahydrofuran and from 0.01 to 6% by weight of heteropolyacids or salts thereof.

4. A process as claimed in claim 1, wherein the hydrocarbon used is cyclohexane, cyclopentane or methylcyclohexane.

5. A process as claimed in claim 1, wherein the water- and heteropolyacid-containing lower phase obtained on phase separation is used for the polymerization of tetrahydrofuran.

6. A process as claimed in claim 1, wherein the water-, heteropolyacid- and tetrahydrofuran-containing lower phases obtained on phase separation are partially or fully freed from tetrahydrofuran and water by distillation and used for the polymerization of tetrahydrofuran.

7. A process as claimed in claim 1, wherein the water- and hydrocarbon-containing middle phase obtained on phase separation is used for the solvent treatment of the crude polyalkylene ether glycols.

## Revendications

1. Procédé d'épuration de polyalkylèneétherglycols bruts, qui sont contaminés par des hétéropolyacides ou leurs sels, par le traitement par des solvants, caractérisé en ce que l'on mélange les polyalkylèneétherglycols bruts avec un hydrocarbure liquide et de l'eau, où, par rapport à la quantité pondérale des polyalkylèneétherglycols, on utilise de 0,2 à 0,5 fois la proportion pondérale de l'hydrocarbure et de 0,03 à 2 fois la proportion pondérale d'eau et on isole les polyalkylèneétherglycols épurés après séparation de phases de la phase supérieure.

2. Procédé suivant la revendication 1, caractérisé en ce que l'on épure des polyalkylèneétherglycols bruts qui ont été obtenus par la polymérisation du tétrahydrofuranne, ou par la copolymérisation du tétrahydrofuranne avec des oxirannes en présence d'hétéropolyacides.

3. Procédé suivant la revendication 1, caractérisé en ce que l'on utilise, à titre de polyalkylèneétherglycols bruts, des mélanges qui présentent une teneur en polyalkylèneétherglycols de 5 à 60% en poids, en tétrahydrofuranne de 94,99 à 39,99% en poids et en hétéropolyacides ou leurs sels de 0,01 à 6% en poids.

4. Procédé suivant la revendication 1, caractérisé en ce que l'on utilise du cyclohexane, du cyclopentane ou du méthylcyclohexane à titre d'hydrocarbures.

5. Procédé suivant la revendication 1, caractérisé en ce que l'on utilise la phase inférieure contenant de l'eau et des hétéropolyacides, obtenue au cours de la séparation en phases, en vue de la polymérisation du tétrahydrofuranne.

6. Procédé suivant la revendication 1, caractérisé en ce que l'on débarrasse les phases inférieures contenant de l'eau, des hétéropolyacides et du tétrahydrofuranne, obtenues par la séparation en phases, partiellement ou totalement du tétrahydrofuranne et de l'eau par distillation et on les utilise en vue de la polymérisation du tétrahydrofuranne.

7. Procédé suivant la revendication 1, caractérisé en ce que l'on utilise la phase médiane contenant de l'eau et de l'hydrocarbure, obtenue au cours de la séparation en phases, en vue du traitement des polyalkylèneglycols bruts par un solvant.
